# EUROPEAN PATENT SPECIFICATION

(11) **EP 3 408 232 B1**
(45) Date of publication and mention of the grant of the patent: **11.10.2023**
(21) Application number: 17704809.7
(22) Date of filing: 27.01.2017
(51) Int. Cl.: C02F 9/00, C02F 1/32, C02F 1/00, C02F 103/02

(54) **IMPROVEMENTS IN AND RELATING TO HEATING AND COOLING SYSTEMS**
VERBESSERUNGEN AN ODER IN ZUSAMMENHANG MIT HEIZ- UND KÜHLSYSTEMEN
PERFECTIONNEMENTS APPORTÉS ET SE RAPPORTANT À DES SYSTÈMES DE CHAUFFAGE ET DE REFROIDISSEMENT

(30) Priority: 27.01.2016 GB 201601488
(43) Date of publication of application: 05.12.2018
(73) Proprietor: Primary Water Treatments Limited, Manchester, Greater Manchester M44 5FF (GB)
(72) Inventor: JONES, Glyn, Manchester Greater Manchester M44 5FF (GB); PENNINGS, Roy, Manchester Greater Manchester M44 5FF (GB)
(74) Representative: Appleyard Lees IP LLP
(86) International application number: PCT/GB2017/050211
(87) International publication number: WO 2017/129989

(56) References cited:
- DE-A1-102005 035 950
- US-A1- 2007 125 719
- US-A1- 2013 319 464

## Description

### FIELD OF INVENTION

The present invention relates to heating and cooling systems, particularly, though not exclusively, to apparatus and methods configured to treat building heating and/or cooling systems.

### BACKGROUND TO INVENTION

Heating and cooling systems using a water based fluid as system water to provide a heat transfer medium are well known. It is generally necessary to perform treatment operations before commissioning of a heating and/or cooling system to remove contaminants such as particles including manufacture debris from system water and to prevent the growth of microbes or corrosion. It is generally also necessary to perform treatment operations as part of a regular maintenance schedule.

US2013/319464A relates to a heat exchanger pipework cleaning apparatus and method, US2007/125719A relates to a system and method of reducing organic contaminants in feed water and DE10205035950A relates to industrial wastewater treatment.

In order to treat heating and/or cooling systems it is known to perform dynamic flushing. This involves flushing the system pipework and other components with a large volume of clean water so that contaminants are progressively flushed from the system. Any contaminants remaining within the system thus become increasingly more dilute until sufficient flushing has been performed that any remaining contaminants are at acceptable levels. Known dynamic flushing, balance flushing and water exchange process typically comprise flushing first with clean water to remove contaminants and then treating with biocides and/or chemical cleaner which involves numerous applications of balance flushing, using substantial amounts of potable water, followed by introduction of inhibitor.

Although dynamic flushing is a treatment method which can be effective at removing contaminants and preventing the growth of microbes or corrosion it is wasteful of water and also generates a substantial volume of contaminated waste water as well as being time consuming and costly. Dynamic flushing also undesirably allows for passing of particles at the flushing points and re-settlement of said particles.

Known heating and cooling systems and methods of their treatment also do not adequately address other matters such as facilitating sampling of the system fluid. For example, samples have to be taken from points in systems not designed for sampling. The BSRIA guide for example advises a procedure to make use of a binder point for sampling but a binder point is not designed for taking system water samples.

Accordingly, the present invention aims to address at least one disadvantage associated with heating and cooling systems and their treatment whether discussed herein or otherwise.

### SUMMARY OF INVENTION

According to the present invention there is provided an apparatus according to claim 1 method according to claim 11 and system according to claim 15.

Other features of the invention will be apparent from the dependent claims, and the description which follows.

According to a first aspect of the present invention there is provided a treatment apparatus configured to treat a heating and/or cooling system characterised in that said treatment apparatus comprises a filter module and one or more other separable treatment modules and wherein the filter module is configured, in use, to receive a full flow of system water and to remove particles from said system water and wherein the apparatus is configured such that, in use, all system water flows through a filter at least once in a 24 hour period and wherein the filter module comprises two filters connected in parallel and one or more valves configured to allow fluid to be selectively directed to flow through one or both filters.

Preferably, there is provided a treatment apparatus configured to treat a heating and/or cooling system and wherein said treatment apparatus comprises a filter module which comprises one or more filters and which is configured, in use, to receive a flow of system water and to remove particles from said system water such that it is not necessary to perform dynamic flushing to clear particles from said heating and/or cooling system.

Suitably, as used herein "system water" refers to a water based fluid which may consist of water but which more preferably comprises water and additives such as for example biocides, cleaning agents and/or corrosion inhibitors.

Suitably, the treatment apparatus is configured to be connected to a heating and/or cooling system throughout the life of the system. Suitably, the treatment apparatus is configured to be connected to a heating and/or cooling system from construction through to pre-commissioning, final commissioning, post commissioning and long term maintenance of said system.

Suitably, the filter module is configured, in use, to remove particles during a pre-commissioning process. Suitably, the filter module is configured, in use, to remove particles during a pre-commissioning cleaning process. Suitably, the filter module is configured, in use, to remove particles during a commissioning process. Suitably, the filter module is configured, in use, to remove particles during a final commissioning process. Suitably, the filter module is configured, in use, to remove particles during a post-commissioning process. Suitably, the filter module is configured, in use, to remove particles during normal operation of a heating and/or cooling system.

Suitably, the filter module is configured, in use, to remove particles comprising manufacture debris, installations debris, initial fill debris, storage debris, metal debris and/or any other foreign debris allowed to enter prior to a commissioning process of a heating and/or cooling system.

Suitably, the filter module is configured, in use, to remove particles comprising manufacture debris installations debris, initial fill debris, storage debris, metal debris and/or any other foreign debris allowed to enter during a commissioning process of a heating and/or cooling system.

Suitably, the filter module is configured, in use, to remove particles released into system water due to expansion and or contraction of components of a heating and/or cooling system.

Suitably, the filter module comprises a filter module which is configured to receive a full flow of system water.

Preferably, the filter module comprises a full flow filter or a plurality of filters configured to act together to provide full flow filtration. Suitably, the filter module comprises a fine full flow filter or a plurality of filters configured to act together to provide fine full flow filtration.

Suitably, the filter module comprises two or more filters. Suitably, the filter module comprises two or more filters connected in parallel to one another. Suitably, the filter module comprises two filters connected in parallel to one another. Suitably, the filter module comprises only two filters and said filters are connected in parallel to one another.

Preferably, the filter module comprises a dual full flow filter assembly.

Preferably, the filter module is configured to remove particles smaller than 100 microns from system water. Preferably, the filter module is configured to remove particles smaller than 50 microns from system water. Preferably, the filter module is configured to remove particles smaller than 30 microns from system water.

Suitably, the filter module comprises a 30 micron or finer filter. Suitably, the filter module comprises a 20 micron filter. Suitably, the filter module comprises a 5 micron filter. Suitably, the filter module comprises two 30 micron or finer filters. Suitably, the filter module comprises two 20 micron filters. Suitably, the filter module comprises two 5 micron filters.

Preferably, the filter module is configured to remove particles having a size of 20 micron or larger from system water. The filter module may be configured to remove particles having a size of 15 micron or larger from system water. The filter module may be configured to remove particles having a size of 10 micron or larger from system water. The filter module may be configured to remove particles having a size of 5 micron or larger from system water.

Preferably, the filter module is configured to remove particles having a thickness of 30 microns or larger from system water. Preferably, the filter module is configured to remove particles having a thickness of 20 microns or larger from system water. Suitably, the filter module is configured to remove particles having a thickness of 5 microns or larger from system water.

Preferably, the filter module is configured to remove particles having a diameter of 30 microns or larger from system water. Preferably, the filter module is configured to remove particles having a diameter of 20 microns or larger from system water. Suitably, the filter module is configured to remove particles having a diameter of 5 microns or larger from system water.

Preferably, the filter module comprises a cartridge filter. Suitably, the filter module comprises two cartridge filters. Suitably, the filter module comprises a spun string cartridge filter. Suitably, the filter module comprises 20 micron or smaller cartridge filters, for example 5 micron cartridge filters.

Suitably, the filter module is configured such that, in use, all system water flowing through a heating and/or cooling system is caused to pass through a filter.

Suitably, the filter module comprises two filters and is configured such that, in use, system water can be caused to pass through just one of said filters whilst the other of said filters is replaced and/or maintained such that a heating and/or cooling system can continue to operate during filter replacement and/or maintenance.

Suitably, the filter module is configured, in use, to provide continuous filtration of system water during operation of a heating and/or cooling system.

Suitably, the filter module is configured to remove particles such as manufacture debris, installation debris, initial fill debris, storage debris, metal debris and/or any other foreign debris above the selected filtration micron size.

Suitably, the apparatus is configured such that, in use, all system water flows through a filter at least once in a 24 hour period. Suitably, the apparatus is configured such that, in use, all system water flows through a filter at least 2 times in a 24 hour period. Suitably, the apparatus is configured such that, in use, all system water flows through a filter at least 3 times in a 24 hour period. Suitably, the apparatus is configured such that, in use, all system water flows through a filter at least 4 times in a 24 hour period. Suitably, the apparatus is configured such that, in use, all system water flows through a filter at least 5 times in a 24 hour period. Suitably, the apparatus is configured such that, in use, all system water flows through a filter at least 6 times in a 24 hour period, for example at least 7 times; 8 times; 9 times; 10 times or 11 times in a 24 hour period. Suitably, the apparatus is configured such that, in use, all system water flows through a filter at least 12 times in a 24 hour period, for example at least 13 times; 14 times; 15 times; 16 times or 17 times in a 24 hour period. Suitably, the apparatus is configured such that, in use, all system water flows through a filter at least 18 times in a 24 hour period, for example at least 19 times; 20 times; 21 times; 22 times or 23 times in a 24 hour period.

Suitably, the treatment apparatus comprises a filter module and other treatment components. Preferably, the treatment apparatus comprises a filter module and other treatment modules.

Suitably, the treatment apparatus comprises one or more filters in addition to the filter or filters in the filter module.

Suitably, the apparatus comprises one or more 5 micron or finer filters. Suitably, the apparatus comprises one or more 5 micron or finer filters in a location other than the filter module. Suitably, the apparatus comprises two 5 micron or finer filters arranged in series with the downstream filter being finer than the upstream filter. Suitably, the apparatus comprises two 2 micron or finer filters arranged in series with the downstream filter being finer than the upstream filter. Suitably, the apparatus comprises two 1 micron or finer filters arranged in series with the downstream filter being finer than the upstream filter. Suitably, the apparatus comprises a 1 micron filter and a 0.25 micron filter.

The treatment apparatus may comprises a filter module integrally formed with other treatment components. The treatment apparatus may comprises a filter module integrally formed with other treatment modules. Preferably, the treatment apparatus comprises a filter module and one or more other discrete treatment modules. Preferably, the treatment apparatus comprises a filter module and one or more other separable treatment modules.

Preferably, the filter module is configured to connect to other treatment modules. Preferably, the filter module is configured to releasably connect to other treatment modules. Suitably, the filter module comprises swivel flange connections for connecting to other treatment modules.

Suitably, the treatment apparatus comprises a modular treatment apparatus comprising a plurality of separable treatment modules in addition to a filter module. Preferably, each module is configured to releasably connect to other treatment modules. Suitably, each module comprises swivel flange connections for connecting to one another.

Suitably, the treatment apparatus comprises the filter module and one or more further modules comprising a filter. Suitably, the apparatus comprises the filter module and a UV module each comprising filters.

Suitably, the apparatus comprises a filter, for example in the UV module, configured to remove particles smaller than 5 microns from system water. Suitably, the apparatus comprises a filter, for example in the UV module, configured to remove particles smaller than 2 microns from system water. Suitably, the apparatus comprises a filter, for example in the UV module, configured to remove particles smaller than 1 microns from system water.

Suitably, the apparatus comprises a filter, for example in the UV module, configured to remove particles of 5 microns or larger from system water. Suitably, the apparatus comprises a filter, for example in the UV module, configured to remove particles of 2 microns or larger from system water. Suitably, the apparatus comprises a filter, for example in the UV module, configured to remove particles of 1 micron or larger from system water. Suitably, the apparatus comprises a filter, for example in the UV module, configured to remove particles of 0.25 microns or larger from system water.

Suitably, the apparatus comprises a filter, for example in the UV module, configured to remove particles having a diameter of 5 microns or larger from system water. Suitably, the apparatus comprises a filter, for example in the UV module, configured to remove particles having a diameter of 2 microns or larger from system water. Suitably, the apparatus comprises a filter, for example in the UV module, configured to remove particles having a diameter of 1 micron or larger from system water. Suitably, the apparatus comprises a filter, for example in the UV module, configured to remove particles having a diameter of 0.25 microns or larger from system water.

Suitably, the treatment apparatus comprises one or more sampling points configured, in use, to allow a sample of system water to be taken.

Suitably, the treatment apparatus comprises two sampling points. Suitably, the treatment apparatus comprises a sampling point upstream of the filter module. Suitably, the treatment apparatus comprises a sampling point downstream of the filter module.

Suitably, the treatment apparatus comprises one or more sampling modules comprising a sampling point configured, in use, to allow a sample of system water to be taken. The treatment apparatus may comprise a sampling module combined with a power flushing module.

Suitably, the water treatment apparatus comprises two sampling modules. Suitably, the treatment apparatus comprises a sampling module upstream of the filter module. Suitably, the treatment apparatus comprises a sampling module downstream of the filter module.

Suitably, the treatment apparatus comprises a sampling module comprising a sampling point valve. Suitably, the treatment apparatus comprises a sampling module comprising a sample stand. The treatment apparatus may comprise a valve configured to connect to a flow regulator, suitably a swan neck flow regulator, and a sample stand configured to hold a collection vessel to receive a sample from said flow regulator.

The sampling module may comprise a swan neck flow regulator. Preferably, the sampling module does not comprise a swan neck flow regulator and instead is configured to have a swan neck flow regulator connected thereto such that a sterilised swan neck flow regulator can be attached when a sample is to be taken. Suitably, the sampling module comprises a sampling point valve which allows a swan neck flow regulator to be attached with a swivel connection to ensure centralisation of the beak of the swan neck over the sample stand in use.

Suitably, the sampling module comprises a sample stand comprising a container to hold a collection vessel. Suitably, the sampling module comprises a sample stand comprising a collection member to collect fluid spilt when filling a collection vessel with a fluid sample. Suitably, the collection member comprises an absorbent material. Suitably, the collection member comprises a sponge, preferably an artificial sponge. Suitably, the collection member is a consumable and may be replaced. Suitably, the sample stand container is configured to hold the collection member.

Suitably, the treatment apparatus comprises flushing points configured, in use, to allow a heating and/or cooling system to be flushed. Suitably, the treatment apparatus comprises power flushing points configured, in use, to allow a heating and/or cooling system to be power flushed.

Suitably, the water treatment apparatus comprises two power flushing points. Suitably, the treatment apparatus comprises a power flushing point upstream of the filter module. Suitably, the treatment apparatus comprises a power flushing point downstream of the filter module. Suitably, the water treatment apparatus is configured such that, in use, the filter module can be isolated when a power flush is performed on a heating and/or cooling system.

Suitably, the treatment apparatus comprises power flushing modules comprising a flushing point configured in use, to allow a heating and/or cooling system to be power flushed.

Suitably, the water treatment apparatus comprises two power flushing modules. Suitably, the treatment apparatus comprises a power flushing module upstream of the filter module.

Suitably, the treatment apparatus comprises a power flushing module downstream of the filter module.

Suitably, the treatment apparatus comprises a power flushing module comprising one or more valves configured to isolate the filter module when a power flush is performed and to allow input and/or output of a flushing fluid via a flushing point to and/or from a heating and/or cooling system.

Suitably, the treatment apparatus comprises a combined power flushing and sampling module. Suitably, the combined power flushing and sampling module comprises a flushing point and a sampling point and preferably comprises further features as described in relation to a sampling module and a power flushing module hereinbefore.

Suitably, the treatment apparatus comprises two combined power flushing and sampling modules.

Suitably, the treatment apparatus comprises a UV (ultra violet) emitter configured, in use, to irradiate system water. Suitably, the treatment apparatus comprises a UV emitter configured, in use, to kill and/or inhibit growth of microbes within system water. Suitably, the treatment apparatus comprises a filter downstream of the UV emitter. Suitably, the treatment apparatus comprises two filters connected in series downstream of the UV emitter. Suitably, the treatment apparatus comprises a filter adapted such that it can selectively receive a flow of water which has (i) passed a UV emitter; (ii) being diverted so as not to pass a UV emitter; or (iii) is a combined flow of (i) and (ii).

Suitably, the treatment apparatus comprises a UV emitter configured, in use, to kill micro-organisms present in system water. The use of the UV emitter may thus reduce the requirement to treat the system water with biocides.

Suitably, the treatment apparatus comprises a UV module configured in use, to allow system water to be treated with UV radiation. Suitably, the UV module comprises a UV emitter, suitably a UV lamp. Suitably, the UV module comprises one or more filters. Suitably, the UV module comprises two filters. Suitably, the UV module comprises two filters arranged in series. Suitably, the UV module comprises a filter downstream of the UV emitter. Suitably, the UV module comprises two filters connected in series downstream of the UV emitter. Suitably, the UV module comprises a filter adapted such that it can selectively receive a flow of water which has (i) passed a UV emitter; (ii) being diverted so as not to pass a UV emitter; or (iii) is a combined flow of (i) and (ii).

Suitably, the UV module comprises two 5 micron or finer filters arranged in series with the downstream filter being finer than the upstream filter. Suitably, the UV module comprises two 2 micron or finer filters arranged in series with the downstream filter being finer than the upstream filter. Suitably, the UV module comprises two 1 micron or finer filters arranged in series with the downstream filter being finer than the upstream filter. Suitably, the UV module comprises a 1 micron filter and a 0.25 micron filter.

Suitably the UV module comprises a first flow path past a UV emitter and a second flow path which bypasses the UV emitter. Suitably, said second flow path is connected in parallel to said first flow path. Suitably, on or both of said first and second flow paths comprises a regulating valve such that, in use, the volume of system water which is caused to flow past the UV emitter can be controlled. This configuration may allow the flow past the UV emitter to be controlled to a volume and flow rate which allows the system water to be effectively treated with UV radiation to kill one or more micro-organisms contained therein.

Suitably, the UV module comprises a first flow path past a UV emitter and a second flow path which bypasses the UV emitter and is configured such that, in use, system fluid can be caused to pass through just said second flow path whilst the UV emitter is replaced and/or maintained such that a heating and/or cooling system can continue to operate during replacement and/or maintenance.

Suitably, the UV module comprises a first flow path which selectively passes a UV emitter and a second flow path which bypasses the UV emitter and wherein one or more filters lie on the first flow path. Suitably the second flow path bypasses the filters of the UV module. Suitably the first flow path comprises a bypass branch and a UV emitter branch. Suitably the first flow path comprises a bypass branch and a UV emitter branch and the one or more filters of the UV module lie downstream of each. Suitably, the flow through the first flow path can be selectively directed through one or both of the UV emitter branch and bypass branch. Suitably, the flow through the UV module can be selectively directed through one or both of the UV emitter branch and bypass branch of the first flow path and/or through the second flow path.

Suitably, the apparatus is adapted such that, in use, flow of system water through the UV module can be managed so that system water can be selectively: (i) UV irradiated and filtered (ii) filtered without being UV irradiated; (iii) not UV irradiated or filtered; or (iv) a combination thereof.

Suitably, in use, the apparatus is adapted such that a minimum of 10% of water flowing through the UV module passes through a filter of the UV module. Suitably, in use, the apparatus is adapted such that a minimum of 15% of water flowing through the UV module passes through a filter of the UV module.

Suitably, in use, the apparatus is adapted such that a minimum of 10% of water flowing through the UV module passes the UV emitter. Suitably, in use, the apparatus is adapted such that a minimum of 15% of water flowing through the UV module passes the UV emitter.

Suitably, the apparatus is configured such that, in use, all system water flows past the UV emitter at least once in a 24 hour period. Suitably, the apparatus is configured such that, in use, all system water flows past the UV emitter at least 2 times in a 24 hour period. Suitably, the apparatus is configured such that, in use, all system water flows past the UV emitter at least 3 times in a 24 hour period. Suitably, the apparatus is configured such that, in use, all system water flows past the UV emitter at least 4 times in a 24 hour period. Suitably, the apparatus is configured such that, in use, all system water flows past the UV emitter at least 5 times in a 24 hour period. Suitably, the apparatus is configured such that, in use, all system water flows past the UV emitter at least 6 times in a 24 hour period, for example at least 7 times; 8 times; 9 times; 10 times or 11 times in a 24 hour period. Suitably, the apparatus is configured such that, in use, all system water flows past the UV emitter at least 12 times in a 24 hour period, for example at least 13 times; 14 times; 15 times; 16 times or 17 times in a 24 hour period. Suitably, the apparatus is configured such that, in use, all system water flows past the UV emitter at least 18 times in a 24 hour period, for example at least 19 times; 20 times; 21 times; 22 times or 23 times in a 24 hour period. Suitably, the apparatus is configured such that, in use, all system water flows past the UV emitter at least 24 times in a 24 hour period.

Suitably, the UV emitter comprises a UV bulb. Suitably, the UV emitter comprises a control panel, bulb, housing, electrical connections and quartz cover.

Use of UV irradiation may reduce the amounts of chemical biocide required and may help address problems associated with the effectiveness of some biocides.

Suitably, the treatment apparatus comprises one or more dosing points configured, in use, to allow a treatment to be added to the system water.

Suitably, the treatment apparatus comprises one or more dosing points configured, in use, to allow a chemical treatment to be added to the system water.

Suitably, the treatment apparatus comprises one or more dosing points configured, in use, to allow a treatment to be automatically added to the system water.

Suitably, the treatment apparatus comprises one or more dosing points configured, in use, to allow a treatment to be automatically added to the system water during commissioning of a heating and/or cooling system and/or during normal operation of a heating and/or cooling system.

Suitably, the treatment apparatus comprises two dosing points.

Suitably, the treatment apparatus comprises one or more dosing modules comprising a dosing point configured, in use, to allow a treatment to be added to the system water.

Suitably, the treatment apparatus comprises a single dosing module.

Suitably, the treatment apparatus comprises a dosing module comprising a dosing point valve. Suitably, the treatment apparatus comprises a dosing module comprising a pump. Suitably, the treatment apparatus comprises a dosing module comprising two dosing points each comprising a valve and pump.

Preferably, the treatment apparatus comprises a dosing module configured to form a permanent part of the treatment apparatus. Alternatively, or in addition, the treatment apparatus may comprise a dosing module configured to form a temporary part of the treatment apparatus.

Preferably, the treatment apparatus comprises only one dosing module which comprises a dosing module configured to form a permanent part of the treatment apparatus. Alternatively, the treatment apparatus may comprise a dosing module configured to form a temporary part of the treatment apparatus and which comprises a pump.

Preferably, the treatment apparatus comprises a dosing module configured to be permanently connected in the flow path of a heating and/or cooling system. Alternatively, of in addition the treatment apparatus may comprise a dosing module configured to be temporarily connected in the flow path of a heating and/or cooling system.

Preferably, the treatment apparatus comprises only one dosing module which comprises a dosing module configured to be permanently connected in the flow path of a heating and/or cooling system.

Suitably, the treatment apparatus comprises a controller to control one or more operations of the treatment apparatus. Suitably, the controller comprises a computer.

Preferably, the apparatus comprises:
(a) a first combined sampling and power flush module;
(b) a filter module;
(c) a dosing module;
(d) a UV module; and
(e) a second combined sampling and power flush module.

Preferably, said modules (a) to (e) are connected in sequence (a) to (e) with module (a) forming the most upstream module in use.

The treatment apparatus suitably further comprises a temporary dosing and/or pumping module (f). Suitably, the temporary dosing and/or pumping module (f) can be temporarily located between modules (a) and (b) when required. Alternatively, the temporary dosing and/or pumping module (f) can suitably be temporarily located between modules (b) and (d) in place of module (c). For example, in use, when no system pump is available a dosing module (c) may be temporarily replaced by a dosing and pumping module (f) until a system pump becomes available.

Suitably, the treatment apparatus is configured to treat a closed or open heating and/or cooling system. Preferably, the treatment apparatus is configured to treat a closed heating and/or cooling system. Suitably, the apparatus is configured to treat a pressurised system. The apparatus may be adapted to treat a condenser circuit of a system. The apparatus may be configured to treat a boiler circuit of a system.

Suitably, the apparatus is configured to treat a HVAC system. Suitably, the treatment apparatus is configured to treat a heating system. Suitably, the treatment apparatus is configured to treat a cooling system. Suitably, the treatment apparatus is configured to treat a heating and cooling system. Suitably, the apparatus is configured to be installed as a permanent part of a heating and/or cooling system.

According to a second aspect of the present invention there is provided a modular treatment apparatus configured, in use, to treat a heating and/or cooling system and wherein said treatment apparatus comprises two or more modules selected from:
(i) a filter module;
(ii) a sampling module;
(iii) a power flushing module;
(iv) a combined sampling and power flushing module;
(v) a UV module; and
(vi) a dosing module.

Suitably, the treatment apparatus comprises a treatment apparatus according to the first aspect.

Preferably, the treatment apparatus comprises discrete connected modules.

Suitably, the modules are configured such that they can be connected to and disconnected from one another. Suitably, the modules are configured such that they can be directly connected to one another. Suitably, the modules are configured such that they can be connected to one another in any order. The modules may be configured such that power flushing modules or combined sampling and power flushing modules are only connected as end modules of the apparatus. Suitably, the module are configured such that one module can be removed and replaced by another module to allow for maintenance, changes or upgrades to the apparatus without the need to replace the apparatus as a whole.

Suitably, the modules have matching connections for releasably connecting to one another. Suitably, the modules have matching sized swivel flange connections for connecting to one another.

Preferably, the treatment apparatus comprises a filter module. Suitably, the filter module comprises a filter module as described in relation to the first aspect.

Suitably, the treatment apparatus comprises a sampling module. Suitably, the sampling module comprises a sampling module as described in relation to the first aspect.

Suitably, the treatment apparatus comprises a power flush module. Suitably, the power flush module comprises a power flush module as described in relation to the first aspect.

Preferably, the treatment apparatus comprises a combined sampling and power flush module. Suitably, the combined sampling and power flush module comprises a combined sampling and power flush module as described in relation to the first aspect.

Preferably, the treatment apparatus comprises two combined sampling and power flush modules. Suitably, the combined sampling and power flush modules each comprise a combined sampling and power flush module as described in relation to the first aspect.

Preferably, the treatment apparatus comprises a filter module and two combined sampling and power flush modules.

Suitably, the treatment apparatus comprises a first combined sampling and power flush module upstream of a filter module and a second combined sampling and power flush module downstream of said filter module.

Suitably, the treatment apparatus comprises a UV module. Suitably, the UV module comprises a UV module as described in relation to the first aspect. Suitably, the UV module comprises one or more filters.

Suitably, there is provided a modular treatment apparatus configured, in use, to treat a heating and/or cooling system and wherein said treatment apparatus comprises a filter module and a UV module. Suitably, the UV module comprises one or more filters.

Suitably, the treatment apparatus comprises a dosing module. Suitably, the dosing module comprises a dosing module as described in relation to the first aspect.

Preferably, the treatment apparatus comprises a dosing module configured to form a permanent part of the treatment apparatus. Alternatively, or in addition, the treatment apparatus may comprises a dosing module configured to form a temporary part of the treatment apparatus. The treatment apparatus may comprise a dosing module comprising a pump and configured to form a temporary part of the treatment apparatus.

The apparatus may comprise (1) a dosing module without a pump and (2) a combined dosing and pumping module. The apparatus may be configured such that, in use, module (1) can be temporarily replaced by module (2). Alternatively, the apparatus may be configured such that, in use, module (2) can be temporarily included in addition to module (1).

Preferably, there is provided a modular treatment apparatus configured, in use, to treat a heating and/or cooling system and wherein said treatment apparatus comprises:
(i) a filter module; and
one or more modules selected from:
(ii) a sampling module;
(iii) a power flushing module;
(iv) a combined sampling and power flushing module;
(v) a UV module; and
(vi) a dosing module.

Suitably, there is provided a modular treatment apparatus configured, in use, to treat a heating and/or cooling system and wherein said treatment apparatus comprises:
a filter module; and
a combined sampling and power flushing module; and
one or more modules selected from:
a sampling module;
a power flushing module;
a combined sampling and power flushing module;
a UV module; and
a dosing module.

Suitably, there is provided a modular treatment apparatus configured, in use, to treat a heating and/or cooling system and wherein said treatment apparatus comprises:
a filter module; and
two combined sampling and power flushing modules; and
one or more modules selected from:
a UV module; and
a dosing module.

Suitably, there is provided a modular treatment apparatus configured, in use, to treat a heating and/or cooling system and wherein said treatment apparatus comprises:
a filter module;
a UV module; and
one or more modules selected from:
a dosing module;
a sampling module;
a power flushing module;
a combined sampling and power flushing module.

Suitably, there is provided a modular treatment apparatus configured, in use, to treat a heating and/or cooling system and wherein said treatment apparatus comprises:
a filter module;
a UV module;
a dosing module; and
one or more modules selected from:
a sampling module;
a power flushing module;
a combined sampling and power flushing module.

Preferably, there is provided a modular treatment apparatus configured, in use, to treat a heating and/or cooling system and wherein said treatment apparatus comprises:
a filter module; and
two combined sampling and power flushing modules;
a UV module; and
a dosing module.

Suitably, there is provided a modular treatment apparatus configured, in use, to treat a heating and/or cooling system and wherein said treatment apparatus has treatment modules arranged in the following configuration beginning with the most upstream module relative to the direction of flow of system water:
(I) a combined sampling and power flushing module;
(II) a filter module;
(III) a dosing module;
(IV) a UV module; and
(V) a combined sampling and power flushing module.

Preferably, the modular treatment apparatus is configured such that, in use, the dosing module remains installed as part of the treatment apparatus during normal operation of a heating and/or cooling system and the dosing module is suitably positioned at location (III) as detailed above. Alternatively, or in addition the modular treatment apparatus may be configured such that a dosing module is disconnected after commissioning of a heating and or cooling system and a dosing module may be positioned differently. The treatment apparatus may comprise a temporary dosing module which may comprise a pump.

There may be provided a modular treatment apparatus configured, in use, to treat a heating and/or cooling system and wherein said treatment apparatus has treatment modules arranged in the following configuration beginning with the most upstream module relative to the direction of flow of system water:
(I) a combined sampling and power flushing module;
(II) a temporary dosing and/or pumping module configured to be disconnected before normal operation of a heating and/or cooling system;
(III) a filter module;
(IV) a UV module; and
(V) a combined sampling and power flushing module.

Suitably, there is provided a modular treatment apparatus configured, in use, to treat a heating and/or cooling system and wherein said treatment apparatus has treatment modules arranged in the following configuration beginning with the most upstream module relative to the direction of flow of system water:
(I) a combined sampling and power flushing module;
(II) a temporary dosing and/or pumping module configured to be disconnected before normal operation of a heating and/or cooling system;
(III) a filter module;
(IV) a dosing module;
(V) a UV module; and
(VI) a combined sampling and power flushing module.

Suitably, there is provided a modular treatment apparatus configured, in use, to treat a heating and/or cooling system and wherein said treatment apparatus has treatment modules arranged in the following configuration beginning with the most upstream module relative to the direction of flow of system water:
(I) a combined sampling and power flushing module;
(II) a filter module;
(III) either (1) a dosing module configured to be connected during normal operation of a heating and/or cooling system or (2) a temporary dosing and/or pumping module configured to be disconnected before normal operation of a heating and/or cooling system;
(IV) a UV module; and
(V) a combined sampling and power flushing module; and
wherein at any given time only one of modules (1) and (2) is connected to the other modules.

Suitably, the treatment apparatus comprises a controller to control one or more operations of the treatment apparatus. Suitably, the controller comprises a computer.

Suitably, the treatment apparatus is configured to treat a closed or open heating and/or cooling system. Preferably, the treatment apparatus is configured to treat a closed heating and/or cooling system. Suitably, the apparatus is configured to treat a pressurised system. The apparatus may be adapted to treat a condenser circuit of a system. The apparatus may be configured to treat a boiler circuit of a system.

Suitably, the apparatus is configured to treat a HVAC system. Suitably, the treatment apparatus is configured to treat a heating system. Suitably, the treatment apparatus is configured to treat a cooling system. Suitably, the treatment apparatus is configured to treat a heating and cooling system. Suitably, the apparatus is configured to be installed as a permanent part of a heating and/or cooling system.

According to a third aspect of the present invention there is provided a sampling apparatus configured, in use, to facilitate sampling of system water from a heating and/or cooling system wherein said sampling apparatus comprises a sampling point configured to allow a sample of system water to be taken and wherein said apparatus comprises a sampling point valve and a sample stand.

Suitably, the sampling apparatus comprises a sampling module. Suitably, the sampling module is configured to form a module of a modular treatment apparatus according to the second aspect. The sampling apparatus may comprise a sampling module combined with a power flushing module.

Suitably, the sampling apparatus comprises a sampling module comprising a sampling point valve and a sample stand. The sampling apparatus may comprise a valve configured to connect to a flow regulator, suitably a swan neck flow regulator, and a sample stand configured to hold a collection vessel to receive a sample from said flow regulator.

The sampling apparatus may comprise a swan neck flow regulator. Preferably, the apparatus does not comprise a swan neck flow regulator and instead is configured to have a swan neck flow regulator connected thereto such that a sterilised swan neck flow regulator can be attached when a sample is to be taken. Suitably, the sampling apparatus comprises a sampling point valve which allows a swan neck flow regulator to be attached with a swivel connection to ensure centralisation of the beak of the swan neck over the sample stand in use.

Suitably, the sampling apparatus comprises a sample stand comprising a container to hold a collection vessel. Suitably, the sampling apparatus comprises a sample stand comprising a collection member to collect fluid spilt when filling a collection vessel with a fluid sample. Suitably, the collection member comprises an absorbent material. Suitably, the collection member comprises a sponge, preferably an artificial sponge. Suitably, the collection member is a consumable and may be replaced. Suitably, the sample stand container is configured to hold the collection member.

Suitably, the apparatus is configured to sample a closed heating and/or cooling system. Suitably, the apparatus is configured to be installed as a permanent part of a heating and/or cooling system.

According to a fourth aspect of the present invention there is provided a method of treating a heating and/or cooling system wherein the method comprises full flow filtering of system water to remove particles from said system water.

Suitably, the method comprises removing particles from said system water without performing a dynamic flush of the heating and/or cooling system.

Preferably, there is provided a method of treating a heating and/or cooling system without performing a dynamic flush of the heating and/or cooling system and wherein the method comprises filtering system water to remove particles from said system water.

Preferably, there is provided a method of treating a heating and/or cooling system wherein the method comprises filtering system water to remove particles from said system water such that it is not necessary to perform dynamic flushing to clear particles from said heating and/or cooling system.

The method may comprise performing a power flush of the system without filtering to remove contaminants from the system prior to performing said filtering. The method may comprise performing a power flush of the system without filtering to remove debris and/or large particles from the system prior to performing said filtering.

Suitably, the method comprises filtering said system water before and/or during commissioning of said heating and/or cooling system.

Suitably, the method comprises filtering said system water to remove particles released due to expansion and contraction of components of said heating and/or cooling system.

Suitably, the method comprises filtering said system water to remove particles released due to expansion and contraction of components of said heating and/or cooling system subsequent to a cleaning and/or flushing process.

Suitably, the method comprises filtering said system water to remove particles released due to expansion and contraction of pipework and/or other components of a heating and/or cooling system when heat and/or cooling is first applied.

Suitably, the method comprises filtering said system water to remove particles released due to expansion and contraction of pipework and/or other components of a heating and/or cooling system when said system is first brought into operation.

Suitably, the method comprises subjecting a heating system to heat and/or cooling to cause expansion and contraction of system pipework causing particles to be released and/or mobilised whilst critical plant and control valves are on bypass and filtering said system water to remove released particles before removing said critical plant and control valves from bypass.

Suitably, the method comprises filtering said system water during commissioning of said heating and/or cooling system. Suitably, the method comprises filtering said system water when heating and/or cooling is first applied. Suitably, the method comprises filtering said system water during normal operation of the heating and/or cooling system. Preferably, the method comprises continuously filtering said system water as it flows through said heating and/or cooling system in use.

Preferably, the method comprises continuously filtering said system water by passing it through a 20 micron or finer filter as it flows through said heating and/or cooling system in use.

Preferably, the method comprises filtering the system water to remove particles smaller than 100 microns. Preferably, the method comprises filtering the system water to remove particles smaller than 50 microns. Preferably, the method comprises filtering the system water to remove particles smaller than 30 microns.

Suitably, the method comprises filtering the system water using a 20 micron filter. The method may comprise filtering the system water using a 5 micron filter.

Preferably, the method comprises removing particles having a size of 20 micron or larger from system water. The method may comprise removing particles having a size of 15 micron or larger from system water. The method may comprise removing particles having a size of 10 micron or larger from system water. The method may comprise removing particles having a size of 5 micron or larger from system water.

Suitably, the method comprises particles of 5 microns or larger from system water. Suitably, the method comprises removing particles of 2 microns or larger from system water. Suitably, the method comprises removing particles of 1 micron or larger from system water. Suitably, the method comprises removing particles of 0.25 microns or larger from system water. Preferably, the method comprises removing particles having a thickness of 30 microns or larger from system water. Preferably, the method comprises removing particles having a thickness of 20 microns or larger from system water. Suitably, the method comprises removing particles having a thickness of 5 microns or larger from system water.

Preferably, the method comprises removing particles having a diameter of 20 micron or larger from system water. The method may comprise removing particles having a diameter of 10 micron or larger from system water. The method may comprise removing particles having a diameter of 5 micron or larger from system water.

Suitably, the method comprises removing particles having a diameter of 5 microns or larger from system water. Suitably, the method comprises removing particles having a diameter of 2 microns or larger from system water. Suitably, the method comprises removing particles having a diameter of 1 micron or larger from system water. Suitably, the method comprises removing particles having a diameter of 0.25 microns or larger from system water.

Suitably, the method comprises removing particles smaller than 5 microns from system water. Suitably, the method comprises removing particles smaller than 2 microns from system water. Suitably, the method comprises removing particles smaller than 1 micron from system water.

Suitably, the method comprises filtering said system water using a full flow filter. Suitably, the method comprises filtering said system water using two filters connected in parallel.

Suitably, the method comprises installing a treatment apparatus comprising a filter to said heating and/or cooling system. Suitably, the method comprises installing a treatment apparatus comprising a filter module to said heating and/or cooling system.

Suitably, the method uses a treatment apparatus according to the first aspect. Suitably, the method comprises connecting a treatment apparatus according to the first aspect to said heating and/or cooling system. Preferably, the method comprises installing a treatment apparatus according to the first aspect as a permanent part of said heating and/or cooling system.

Suitably, the method uses a treatment apparatus according to the second aspect. Suitably, the method comprises connecting a treatment apparatus according to the second aspect to said heating and/or cooling system. Preferably, the method comprises installing a treatment apparatus according to the second aspect as a permanent part of said heating and/or cooling system.

Suitably, the method comprises taking a sample of system water for testing. Suitably, the method comprises passing system water through a sampling module or combined sampling and power flushing module.

Suitably, the method comprises power flushing the heating and/or cooling system. Suitably, the method comprises power flushing the heating and/or cooling system without filtering. Suitably, the method comprises isolating a filter module of the treatment apparatus whilst performing power flushing. Suitably, the method comprises passing system water through a power flushing module or combined sampling and power flushing module.

Suitably, the treatment apparatus comprises a combined sampling and power flushing module at either end thereof and the method comprises isolating the remainder of the treatment apparatus during power flushing.

Suitably, the method comprises irradiating system water with UV radiation. Suitably, the method comprises passing system water through a UV module. Suitably, the method comprises passing system water through a UV module comprising a filter. Suitably, the method comprises UV irradiating and then filtering system water. Suitably, the method comprises using a 1 micron or finer filter. Suitably, the method comprises filtering with a 1 micron filter and a 0.25micron filter subsequent to UV irradiating. Suitably, the method comprises filtering system water, then UV irradiating system water then further filtering system water.

Suitably, the method comprises adding a treatment to system water. Suitably, the method comprises adding a treatment chemical to system water. Suitably, the method comprises dosing system water with chemical treatment. Suitably, the method comprises automatically dosing system water with treatment chemicals. Suitably, the method comprises adding a biocide to system water. Suitably, the method comprises adding a corrosion inhibitor to system water. Suitably, the method comprises passing system water through a dosing module.

Suitably, the method comprises using a treatment apparatus which comprises a controller to control one or more operations of the treatment apparatus. Suitably, the controller comprises a computer.

Suitably, the method comprises dynamic full filtration of system water. Suitably, the method comprises causing all system water to flow through a filter at least once in a 24 hour period. Suitably, the method comprises causing all system water to flow through a filter at least 2 times, for example at least 3 times; 4 times; 5 times in a 24 hour period. Suitably, the method comprises causing all system water to flow through a filter at least 6 times, for example at least 12 times; 18 times; or 24 times in a 24 hour period.

Suitably, the method comprises causing all system water to flow past a UV emitter at least once in a 24 hour period. Suitably, the method comprises causing all system water to flow past a UV emitter at least 2 times, for example at least 3 times; 4 times; 5 times in a 24 hour period. Suitably, the method comprises causing all system water to flow past a UV emitter at least 6 times, for example at least 12 times; 18 times; or 24 times in a 24 hour period.

Suitably, the method comprises treating a closed or open heating and/or cooling system. Preferably, the method comprises treating a closed heating and/or cooling system. Suitably, the method comprises treating a pressurised system. The method may comprise treating a condenser circuit of a system. The method may comprise treating a boiler circuit of a system.

Suitably, the method comprises treating a HVAC system. Suitably, the method comprises treating a heating system. Suitably, the method comprises treating a cooling system. Suitably, the method comprises treating a heating and cooling system.

Suitably, the method allows a system to be treated prior to commissioning using less water than would be required for a dynamic flushing method. The method may comprise treating a system in sections as it is constructed.

The method may comprise using a treatment apparatus to perform any function as described in relation to the first and/or second aspect.

According to a fifth aspect of the present invention there is provided a method of treating a heating and/or cooling system, wherein the method comprises using a treatment apparatus according to the first and/or second aspect.

Preferably, the method comprises using a treatment apparatus according to the second aspect.

Suitably, the method comprises filtering system water. Suitably, the method comprises passing system water through a filtering module. Suitably, the method comprises filtering system water according to the method of the fourth aspect.

Suitably, the method comprises filtering system water to remove particles released and/or mobilised by contraction and/or expansion of system pipework. Suitably, the method comprises initially applying heat and/or cooling to a heating and/or cooling system to cause contraction and/or expansion of system pipework whist filtering system water.

Suitably, the method comprises taking a sample of system water for testing. Suitably, the method comprises passing system water through a sampling module or combined sampling and power flushing module.

Suitably, the method comprises power flushing the heating and/or cooling system. Suitably, the method comprises power flushing the heating and/or cooling system without filtering. Suitably, the method comprises isolating a filter module of the treatment apparatus whilst performing power flushing. Suitably, the method comprises passing system water through a power flushing module or combined sampling and power flushing module.

Suitably, the treatment apparatus comprises a combined sampling and power flushing module at either end thereof and the method comprises isolating the remainder of the treatment apparatus during power flushing.

Suitably, the method comprises irradiating system water with UV radiation. Suitably, the method comprises passing system water through a UV module. Suitably, the method comprises passing system water through a UV module comprising a filter. Suitably, the method comprises UV irradiating and then filtering system water. Suitably, the method comprises using a 1 micron or finer filter. Suitably, the method comprises filtering with a 1 micron filter and a 0.25micron filter subsequent to UV irradiating. Suitably, the method comprises filtering system water, then UV irradiating system water then further filtering system water.

Suitably, the method comprises adding a treatment to system water. Suitably, the method comprises adding a treatment chemical to system water. Suitably, the method comprises dosing system water with chemical treatment, Suitably, the method comprises automatically dosing system water with treatment chemicals Suitably, the method comprises adding a biocide to system water. Suitably, the method comprises adding a corrosion inhibitor to system water. Suitably, the method comprises passing system water through a dosing module.

Suitably, the method comprises using a treatment apparatus which comprises a controller to control one or more operations of the treatment apparatus. Suitably, the controller comprises a computer.

Suitably, the method comprises dynamic full filtration of system water. Suitably, the method comprises causing all system water to flow through a filter at least once in a 24 hour period. Suitably, the method comprises causing all system water to flow through a filter at least 2 times, for example at least 3 times; 4 times; 5 times in a 24 hour period. Suitably, the method comprises causing all system water to flow through a filter at least 6 times, for example at least 12 times; 18 times; or 24 times in a 24 hour period.

Suitably, the method comprises causing all system water to flow past a UV emitter at least once in a 24 hour period. Suitably, the method comprises causing all system water to flow past a UV emitter at least 2 times, for example at least 3 times; 4 times; 5 times in a 24 hour period. Suitably, the method comprises causing all system water to flow past a UV emitter at least 6 times, for example at least 12 times; 18 times; or 24 times in a 24 hour period.

Suitably, the method comprises causing filtered system water to flow past a UV emitter and then through a filter at least once in a 24 hour period. Suitably, the method comprises causing filtered system water to flow past a UV emitter and then through a filter at least 2 times, for example at least 3 times; 4 times; 5 times in a 24 hour period. Suitably, the method comprises causing filtered system water to flow past a UV emitter and then through a filter at least 6 times, for example at least 12 times; 18 times; or 24 times in a 24 hour period.

Suitably, the method comprises treating a closed or open heating and/or cooling system. Preferably, the method comprises treating a closed heating and/or cooling system. Suitably, the method comprises treating a pressurised system. The method may comprise treating a condenser circuit of a system. The method may comprise treating a boiler circuit of a system.

Suitably, the method comprises treating a HVAC system. Suitably, the method comprises treating a heating system. Suitably, the method comprises treating a cooling system. Suitably, the method comprises treating a heating and cooling system.

Suitably, the method allows a system to be treated prior to commissioning using less water than would be required for a dynamic flushing method. The method may comprise treating a system in sections as it is constructed.

The method may comprise using a treatment apparatus to perform any function as described in relation to the second aspect.

According to a sixth aspect of the present invention there is provided a method of sampling system water from a heating and/or cooling system, wherein the method comprises using a sampling apparatus according to the third aspect.

The sampling apparatus may comprise a sampling module combined with a power flushing module.

Suitably, the sampling apparatus comprises a sampling module comprising a sampling point valve. Suitably, the sampling apparatus comprises a sampling module comprising a sample stand. The sampling apparatus may comprise a valve configured to connect to a flow regulator, suitably a swan neck flow regulator, and a sample stand configured to hold a collection vessel to receive a sample from said flow regulator.

Suitably, the method comprises connecting a swan neck flow regulator to a sampling point valve. Suitably, the method comprises locating a collection vessel at a sample stand to receive a system water sample from a swan neck flow regulator connected to a sampling point valve.

Suitably, the method uses a bottle as a collection vessel.

Suitably, the method comprises sterilising a sampling point valve. Suitably, the method comprises placing a sponge collection member in a container of the sample stand. The method may comprise sterilising a swan neck flow regulator connected to a sampling point valve. Preferably, the method comprises connecting a pre-sterilised swan neck flow regulator to a sampling point valve. Suitably, the method comprises centralising the swan neck flow regulator over the sample stand. Suitably, the method comprises running a small amount of system water into a container to vent and discarding said water. Suitably, the method comprises placing a collection bottle in the container of the sample stand and centralising a neck of the collection bottle with the beak of the swan neck flow regulator. Suitably, the method comprises removing a cap from a collection bottle whilst the bottle is in a container of the sample stand. Suitably, the method comprises running a system water sample into the bottle and filling the bottle to the brim and replacing the cap. Preferably, the steps described in this paragraph are preferably performed in the sequence described.

Suitably, the method comprises sampling a closed heating and/or cooling system.

According to a seventh aspect of the present invention there is provided a heating and/or cooling system having an apparatus according to the first, second and/or third aspects connected thereto.

Suitably, the heating and/or cooling system comprises a primary circuit and may further comprise secondary circuits. Suitably, the apparatus according to the first, second and/or third aspect is connected to the primary circuit.

Preferably, the apparatus according to the first, second and/or third aspect is permanently installed as part of the heating and/or cooling system. Alternatively, the apparatus according to the first, second and/or third aspect may be temporarily connected to the heating and/or cooling system.

Suitably, the system comprises a closed or open heating and/or cooling system. Preferably, the heating and/or cooling system comprises a closed system. Suitably, the heating and/or cooling system comprises a primary circuit. Suitably, the heating and/or cooling system comprises one or more secondary circuits.

Suitably, the system comprises a pressurised system. Suitably, the system comprises a condenser circuit to which the apparatus sis connected. Suitably, the system comprises a boiler circuit to which the apparatus is connected.

Suitably, the system comprises a HVAC system. Suitably, the heating and/or cooling system comprises a heating system. Suitably, the heating and/or cooling system comprises a cooling system. Suitably, the heating and/or cooling system comprises a heating and cooling system. Suitably, the system comprises said apparatus according to the first, second and/or third aspects installed as a permanent part of said system.

Suitably, the apparatus comprises apparatus according to the first aspect. Suitably, the apparatus comprises apparatus according to the second aspect. Suitably, the apparatus comprises apparatus according to the third aspect.

### BRIEF DESCRIPTION OF DRAWINGS

The present invention will now be illustrated by way of example with reference to the accompanying drawings in which:
Figure 1 shows a water treatment apparatus connected to a heating and cooling system; and
Figure 2 shows an alternative embodiment of a water treatment apparatus connected to a heating and cooling system.

### DETAILED DESCRIPTION OF PREFERRED EMBODIMENTS

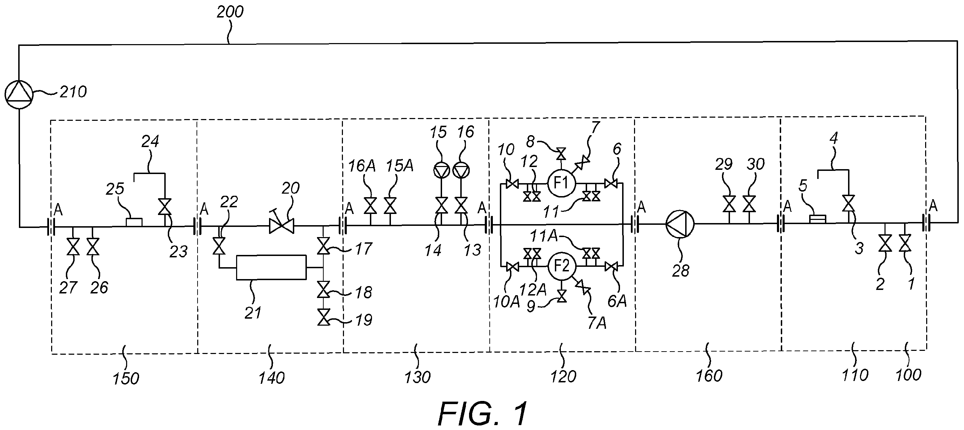

Figure 1 shows a treatment apparatus 100 comprising a number of treatment modules.

The treatment apparatus 100 comprises five permanent treatment modules which are:
110 First combined sampling and flushing module
120 Filter module
130 Dosing module
140 UV module
150 Second combined sampling and flushing module.

The treatment apparatus further comprises a temporary treatment module:
160 Temporary pumping and dosing module.

The temporary treatment module 160 can be connected and used when system pumps are unavailable for use. In the illustrated embodiment the treatment module 160 is temporarily connected between modules 110 and 120. In an alternative embodiment (not illustrated) the treatment module 160 is temporarily located between modules 120 and 140 in place of module 130.

The treatment apparatus 100 is connected to a heating and cooling system 200 which is a closed loop system (only primary circuit shown and illustrated as a single pipe for simplicity).

The treatment apparatus 100 is connected such that, in use, system water flows through the first combined sampling and flushing module 110 then to the temporary dosing module 160 (if present) and to the filter module 120. The system water then flows to the dosing module 130, the UV module 140 and the second combined sampling and flushing module 150.

The treatment apparatus 100 comprises the following components:
110 First combined sampling and flushing module
   - A: Swivel Flanged Connections
   - 1: Power Flush Valve
   - 2: Power Flush Valve
   - 3: Sampling Point Valve
   - 4: Swan Neck Flow Regulator
   - 5: Sample Stand
120 Filter module
   - A: Swivel Flanged Connections
   - 6: Filter Isolating Valve
   - 6A: Filter Isolating Valve
   - 7: Filter Drain
   - 7A: Filter Drain
   - 8: Automatic Air Vent
   - 9: Automatic Air Vent
   - 10: Filter Isolating Valve
   - 10A: Filter Isolating Valve
   - F1: Full Flow Filter
   - F2: Full Flow Filter
   - 11: Pressure Gauge / Flow Switch
   - 11A: Pressure Gauge / Flow Switch
   - 12: Pressure Gauge / Flow Switch
   - 12A: Pressure Gauge / Flow Switch
130 Dosing module
   - A: Swivel Flanged Connections
   - 13: Auto Dosing Valve
   - 14: Auto Dosing Valve
   - 15: Auto Dosing Pump
   - 16: Auto Dosing Pump
   - 15A: Future Use Valve
   - 16A: Future Use Valve
140 UV module
   - A: Swivel Flanged Connections
   - 17: UV Isolating Valve / Regulating Valve
   - 18: Future Use Valve
   - 19: RPZ Valve
   - 20: Regulating Valve
   - 21: UV Plant
   - 22: UV Isolating Valve
150 Second combined sampling and flushing module
   - A: Swivel Flanged Connections
   - 23: Sampling Point Valve
   - 24: Swan Neck Flow Regulator
   - 25: Sample Stand
   - 26: Power Flush Valve
   - 27: Power Flush Valve
160 Temporary pumping and dosing module
   - A: Swivel Flanged Connections
   - 28: Temporary Pump
   - 29: Auto Dosing Valve
   - 30: Auto Dosing Valve

The heating and cooling system 200 is a closed system and incorporates a system pump 210 as well as other components (not shown).

The treatment apparatus 100 is a modular apparatus and the modules are configured to connect to one another by swivel flanged connections A. Modules can be removed as required for maintenance, replacement or upgrade.

Although the illustrated treatment apparatus 100 has five permanent modules and one temporary module in other embodiments, not illustrated, one or more modules are omitted. In many cases the temporary dosing module 160 will not be required. In some cases the UV module 140 will not be required for example. In alternative embodiments, not illustrated, one or both of the combined sampling and power flushing modules 110, 150 are replaced by separate sampling modules and power flush modules.

The combined sampling and power flushing module 110 comprises power flush valves 1, 2 as well as a sampling point valve 3 and a sample stand 5. The sample stand 5 comprises a sample container (not illustrated) which holds a collection member (not shown) which comprises a sponge to collect any system water spilt when a sample is being collected. Illustrated in Figure 1 is a swan neck flow regulator 4 which is connected to the sampling point valve 3 to allow a sample to be taken. The swan neck flow regulator 4 is a removable component and the module 110 is configured to allow a sterilised swan neck flow regulator 4 to be connected each time a sample is required to be taken.

The combined sampling and power flushing module 150 is similar to module 110 and comprises power flush valves 26, 27 as well as a sampling point valve 23 and a sample stand 25. The sample stand 25 comprises a sample container (not illustrated) which holds a collection member (not shown) which comprises a sponge to collect any system water spilt when a sample is being collected. Illustrated in Figure 1 is a swan neck flow regulator 24 which is connected to the sampling point valve 23 to allow a sample to be taken. The swan neck flow regulator 24 is a removable component and the module 150 is configured to allow a sterilised swan neck flow regulator 24 to be connected each time a sample is required to be taken.

The filter module 120 comprises two filters F1, F2 which are connected in parallel to one another and which provide the flow path through the filter module 120. The filter module 120 thus provides full flow filtration of the system water. Each of the filters F1, F2 comprises a 20 micron cartridge filter. The filter module 120 comprises filter isolating valves 10, 10A, 6 & 6A allowing one of the filters F1, F2 to be isolated for maintenance or replacement whilst allowing the other filter F1, F2 to continue to provide full flow filtration allowing continued operation of the treatment apparatus 100 and thus of the heating and/or cooling system 200. Individual filter drains, 7 & 7A, are supplied to allow inspection, maintenance of an individual filter in isolation without disrupting system service.

The dosing module 130 comprises automatic dosing valves, 13, 14 and pumps 15, 16 and is configured to be connected to a supply of treatment chemicals to be dosed into the system water as required. Valves 15A & 16A are future use valves for use with apparatus such as a degasser plant or remote monitoring plant.

The UV module 140 comprises a UV plant 21 comprising a UV emitter and a parallel by-pass path comprising a regulating valves 20 & 17. The UV module 140 further comprises isolating valves 17, 22 allowing the UV plant to be isolated for maintenance or replacement whilst allowing continued operation of the treatment apparatus 100 (without UV irradiation) and thus of the heating and/or cooling system 200. Valve 19 is a RPZ valve which allows connection of a water make up and pressurisation unit (not shown).

The temporary dosing module 160 comprises a temporary pump 28 as well as automatic dosing valves 29, 30 and is configured to be connected to a supply of treatment chemicals to be dosed into the system water as required. This temporary dosing module 160 is intended to only be connected to the remainder of the treatment apparatus 100 when system pumps are not available.

In use system water enters the treatment apparatus 100 and first meets valves 1 and 2 (power flush valves) and then passes sampling point valve 3 in module 110. With the configuration shown in Figure 1 the system water then enters temporary dosing module 160 before passing to the filter module 120. However, the connection of the temporary dosing module 160 between module 110 and 160 is temporary and in the normal configuration of the treatment apparatus 100 the temporary dosing module is disconnected and module 120 connects directly to module 110. In that case system water flows from combined testing and power flushing module 110 directly into filter module 120 and flows to filters F1 and F2. Prior to entering the dual filters the water passes isolating valves 6 & 6A, pressure gauge and flow protection switches at points 11 and 11A. Automatic air vents are placed on top of the filter housings, valves 8 & 9. Passing out of the filter further pressure gauges /flow switches points at 12 & 12A and isolating valves 10 & 10A are reached. The flow switches are protection for loss of flow which will signal an alarm. The system water flows from module 120 into dosing module 130, the module contains valves 13, 14 which are automatic dosing connection valves to inject chemicals into the system and continues past future use valves 25A, 16A. The system water continues into module 140 which contains a regulated UV plant 21 configured to treat 4 times the system volume of water in a 24 hours period. The system water is regulated at valve 20 & 17 causing the correct amount of water to pass isolating valve 17 and through the UV plant 21 passed the isolation valve 22. The system water then flows to the combined testing and power flushing module 150.

The treatment apparatus 100 is configured to be connected to a heating and cooling system 200 throughout the life of the system from construction, through commissioning and then long term maintenance.

The apparatus is configured such that the filters F1 and F2 allow the removal of particles, including fine particles from system water meaning that dynamic flushing need not be performed on the heating and cooling system 200. The filter F1 and F2 allow dynamic filtration to be undertaken without the need to flush waste water to drain.

The modules of the apparatus 100 can be operated as required by a user with some operations automatically controlled by a controller (not shown). An example method of operation is set out below.

Where system water is heavily contaminated, for example contains chemicals or is saturated with rust it is desirable to remove a significant proportion of the contamination as effluent without passing it through the filter module 120. This can be achieved using the combined sampling and power flushing modules 110, 150.

Temporary pumps (not shown) and adequate water storage tanks (not shown) are connected to valves 26, 27 and water is pumped through the closed circuit heating/cooling system 200 to valves 1, 2 where it is discharged via temporary hoses (not shown) to a foul drain (not shown).

This is an efficient method of effluent removal. The process removes chemicals and contaminants using the least amount water and the amount of waste water is reduced compared to a dynamic balanced flushing process which is a process which dilutes the system water over a extended period of time.

Once heavy contamination is removed from the heating and cooling system 200 by a power flushing operation the treatment apparatus 100 can be configured to direct system water to flow though the filter module 120.

With system water directed to flow through modules 110, 120, 130, 140 and 150 of the treatment apparatus 100 a series of operations are performed subsequent to the power flushing operation.

Samples of system water are taken from the combined sampling and power flushing modules 110 and 150. To collect samples the following procedure is used:
1 - The sample point valve is sterilised;
2 - A sponge collection member is placed in a container of the sample stand;
3- Sterile gloves are worn;
4 - A pre-sterilised swan neck flow regulator is attached to the sampling point valve, tightened and centralised over the sample stand;
5 - A small amount of system water is run into a container to vent and discarded;
6 - A bottle with a cap is placed in the container of the sample stand and the neck of the bottle is centralised with the beak of the swan neck flow regulator;
7 - The cap is removed from the bottle whilst the bottle is in the container of the sample stand and held with the cap pointing downwards;
8 - System water is run into the bottle and the bottle is filled to the brim and the cap replaced.

Samples are also taken subsequently during and after stages of treatment as necessary to check system water is of acceptable quality. Once the system is operational samples are taken as required to monitor the quality of system water.

After the power flushing the heating and cooling system is then subjected to conditions to cause pipework contraction and expansion and then final commissioning is performed.

To subject the heating and cooling system to conditions to cause pipework contraction and expansion heat and cooling is introduced into the system in a controlled manner such that any released and/or mobilised debris is presented to and removed by the filters at the filter module 120.

The following procedure is used to subject the heating and cooling system to conditions to cause pipework contraction and expansion:
Heating and cooling is applied to primary circuits of the heating and cooling system initially.
Heating and cooling is then applied to secondary/sub circuits in order of their tolerance.

The system is initially operated in bypass conditions and eventually all plant/equipment is placed in the full flow position.

Flow rates are manipulated during the process to maximise the amount of available debris for removal.

The final commissioning activities follow this process.

In an alternative method of operation, if final commissioning of a heating and cooling system has already begun or even been completed under ambient conditions the heating and cooling system can be placed to bypass and the system subjected to conditions to cause pipework contraction and expansion such that any released and/or mobilised debris is presented to and removed by the filters at the filter module 120.

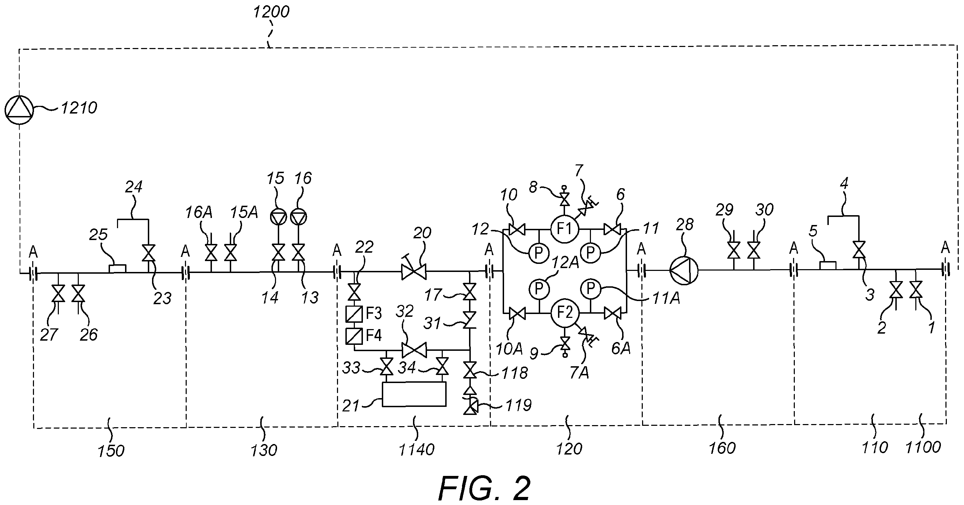

Figure 2 shows an alternative embodiment of a treatment apparatus 1100 comprising a number of treatment modules.

The treatment apparatus 1100 comprises five permanent treatment modules which are:
- 110: First combined sampling and flushing module
- 120: Filter module
- 130: Dosing module
- 1140: UV module
- 150: Second combined sampling and flushing module.

The treatment apparatus 1100 further comprises a temporary treatment module:
160 Temporary pumping and dosing module.

The treatment apparatus 1100 of Figure 2 is generally the same as the treatment apparatus 100 of Figure 1 but has a UV module 1140 which differs from the UV module 140 of the treatment apparatus 100. In addition the UV module 1140 and dosing module 130 are configured in a different order in treatment apparatus 1100 to that of treatment apparatus 100 with the dosing module 130 lying downstream of the UV module 1140.

As with apparatus 100, the temporary treatment module 160 can be connected and used when system pumps are unavailable for use. In the illustrated embodiment of apparatus 1100 the treatment module 160 is temporarily connected between modules 110 and 120.

The treatment apparatus 1100 is connected to a heating and cooling system 1200 which is a closed loop system (only primary circuit shown and illustrated as a single pipe for simplicity).

The treatment apparatus 1100 is connected such that, in use, system water flows through the first combined sampling and flushing module 110 then to the temporary dosing module 160 (if present) and to the filter module 120. The system water then flows to the UV module 1140, dosing module 130, and the second combined sampling and flushing module 150.

The treatment apparatus 1100 comprises the following components:
110 First combined sampling and flushing module
   - A: Swivel Flanged Connections
   - 1: Power Flush Valve
   - 2: Power Flush Valve
   - 3: Sampling Point Valve
   - 4: Swan Neck Flow Regulator
   - 5: Sample Stand
120 Filter module
   - A: Swivel Flanged Connections
   - 6: Filter Isolating Valve
   - 6A: Filter Isolating Valve
   - 7: Filter Drain
   - 7A: Filter Drain
   - 8: Automatic Air Vent
   - 9: Automatic Air Vent
   - 10: Filter Isolating Valve
   - 10A: Filter Isolating Valve
   - F1: Full Flow Filter
   - F2: Full Flow Filter
   - 11: Pressure Gauge / Flow Switch
   - 11A: Pressure Gauge / Flow Switch
   - 12: Pressure Gauge / Flow Switch
   - 12A: Pressure Gauge / Flow Switch
1140 UV module
   - A: Swivel Flanged Connections
   - 17: UV Isolating Valve / Regulating Valve
   - 118: RPZ Valve
   - 119: Future Use Valve
   - 20: Regulating Valve
   - 21: UV Plant
   - 22: UV Isolating Valve
   - 31: Non Return Valve
   - 32: Isolation Valve
   - 33: Isolation Valve
   - 34: Isolation Valve
   - F3: Filter
   - F4: Filter
130 Dosing module
   - A: Swivel Flanged Connections
   - 13: Auto Dosing Valve
   - 14: Auto Dosing Valve
   - 15: Auto Dosing Pump
   - 16: Auto Dosing Pump
   - 15A: Future Use Valve
   - 16A: Future Use Valve
150 Second combined sampling and flushing module
   - A: Swivel Flanged Connections
   - 23: Sampling Point Valve
   - 24: Swan Neck Flow Regulator
   - 25: Sample Stand
   - 26: Power Flush Valve
   - 27: Power Flush Valve
160 Temporary pumping and dosing module
   - A: Swivel Flanged Connections
   - 28: Temporary Pump
   - 29: Auto Dosing Valve
   - 30: Auto Dosing Valve

The heating and cooling system 1200 is a closed system and incorporates a system pump 1210 as well as other components (not shown).

The UV module 1140 comprises a UV plant 21 comprising a UV emitter. The UV module 1140 further comprises two filters, F3, F4. The most upstream of the two filters, F4, is a 1 micron filter and the most downstream, F3, is a 0.25 micron filter.

The UV module 1140 comprises a first flow path which selectively passes the UV plant 21 and passes through the filters F3, F4 and a second (by-pass) flow path which bypasses the filters F3, F4 and UV plant 21. A regulating valve 20 lies on the second (by-pass) flow path.

The first flow path comprises two branches: a UV emitter branch which comprises valve 34, UV plant 21 and valve 33; and a bypass branch which comprises valve 32. The UV module also comprises valves 17, 31 and 22 as well as filters F3, F4 on the first flow path with the filters F3, F4, located on the first flow path after the UV emitter branch and bypass branch meet.

The UV module 1140 is adapted such that, in use, the flow through the first flow path can be selectively directed through one or both of the UV emitter branch and bypass branch. In addition, the UV module 1140 is adapted such that the flow through the module can be selectively directed through one or both of the first flow path and/or through the second (by-pass) flow path. In this manner flow of system water through the UV plant 21 and filters F3, F4, can be managed, in use, so that system water can be selectively: (i) UV irradiated and filtered (ii) filtered without being UV irradiated; (iii) not UV irradiated or filtered; or (iv) a combination thereof.

It will be appreciated that preferred embodiments of the present invention may provide an effective apparatus and method for treating heating and/or cooling systems.

## Claims

1. A treatment apparatus (100) configured to treat a heating and/or cooling system (200) **characterised in that** said treatment apparatus (100) comprises a filter module (120) and one or more other separable treatment modules (110, 130, 140, 150, 160) and wherein the filter module (120) is configured, in use, to receive a full flow of system water and to remove particles from said system water and wherein the apparatus (100) is configured such that, in use, all system water flows through a filter (F1, F2) at least once in a 24 hour period and wherein the filter module (120) comprises two filters (F1, F2) connected in parallel and one or more valves (6, 6A, 10, 10A) configured to allow fluid to be selectively directed to flow through one or both filters (F1, F2).

2. A treatment apparatus (100) according to claim 1, wherein the apparatus (100) is configured to treat a closed heating and/or cooling system (200), optionally a HVAC system.

3. A treatment apparatus (100) according to claim 1 or 2, wherein the apparatus (100) is further **characterised in that** said apparatus comprises:
(i) said filter module (120); and
one or more modules selected from:
(ii) a sampling module;
(iii) a power flushing module;
(iv) a combined sampling and power flushing module (110);
(v) a UV module (140); and
(vi) a dosing module (130); and
wherein the modules are optionally configured such that they can be connected to and disconnected from one another.

4. A treatment apparatus (100) according to any preceding claim, wherein, the filter module (120) comprises a 20 micron filter.

5. A treatment apparatus (100) according to any preceding claim, wherein the treatment apparatus (100) comprises one or more sampling points configured, in use, to allow a sample of system water to be taken and/or wherein the treatment apparatus (100) comprises power flushing points configured, in use, to allow a heating and/or cooling system to be power flushed and/or wherein the treatment apparatus (100) comprises a UV (ultra violet) emitter configured, in use, to irradiate system water and/or wherein the treatment apparatus (100) comprises one or more dosing points configured, in use, to allow a treatment to be added to the system water.

6. An apparatus (100) according to any preceding claim wherein the apparatus (100) comprises a UV module (140) comprising a UV emitter and one or more filters.

7. An apparatus (100) according to any preceding claim, wherein said apparatus (100) comprises:
a filter module (120); and
a combined sampling and power flushing module (110) and/or a UV module (140); and one or more modules selected from:
a sampling module;
a power flushing module; and
a combined sampling and power flushing module; and
a dosing module (130).

8. An apparatus (100) according to any preceding claim wherein said apparatus (100) has treatment modules arranged in the following configuration beginning with the most upstream module relative to the direction of flow of system water:
(I) a combined sampling and power flushing module (110);
(II) a temporary dosing and/or pumping module (160)configured to be disconnected before normal operation of a heating and/or cooling system;
(III) a filter module (120);
(IV) a dosing module (130);
(V) a UV module (140); and
(VI) a combined sampling and power flushing module (110).

9. An apparatus (100) according to any preceding claim, wherein the apparatus comprises a 1 micron filter and a 0.25 micron filter.

10. An apparatus (100) according to any preceding claim wherein the apparatus (100) comprises a UV module (140) comprising a UV emitter and one or more filters and wherein the UV module (140) comprises a 1 micron filter and a 0.25 micron filter.

11. A method of treating a heating and/or cooling system (200) **characterised in that** the method comprises full flow filtering of system water to remove particles from said system water such that, in use, all system water flows through a filter at least once in a 24 hour period wherein the method uses a treatment apparatus (100) according to any of claims 1 to 8.

12. A method according to claim 11, wherein the method comprises filtering the system water using a 20 micron filter and/or wherein, the method comprises removing particles from said system water without performing a dynamic flush of the heating and/or cooling system (200) and/or wherein the method comprises performing a power flush of the system (200) without filtering to remove contaminants from the system (200) prior to performing said filtering and wherein the method optionally comprises filtering said system water to remove particles released due to expansion and contraction of components of said heating and/or cooling system (200) and wherein the method optionally comprises filtering said system water to remove particles released due to expansion and contraction of components of said heating and/or cooling system (200) subsequent to a cleaning and/or flushing process.

13. A method according to any of claims 11 to 12, wherein the method comprises subjecting a heating system (200) to heat and/or cooling to cause expansion and contraction of system pipework causing particles to be released and/or mobilised whilst critical plant and control valves are on bypass and filtering said system water to remove released particles before removing said critical plant and control valves from bypass.

14. A method according to any of claims 11 to 13, wherein the method comprises continuously filtering said system water as it flows through said heating and/or cooling system (200) in use and/or wherein, the method comprises installing a treatment apparatus (100) according to any of claims 1 to 8 as a permanent part of said heating and/or cooling system (200) and/or wherein the system comprises a closed heating and/or cooling system (200), optionally a HVAC system.

15. A heating and/or cooling system (200) having an apparatus (100) according to any of claims 1 to 10 connected thereto and wherein the system optionally comprises a closed heating and/or cooling system (200), optionally a HVAC system.

## Patentansprüche

1. Aufbereitungsvorrichtung (100), die dazu ausgelegt ist, ein Heiz- und/oder Kühlsystem (200) aufzubereiten, **dadurch gekennzeichnet, dass** die Aufbereitungsvorrichtung (100) ein Filtermodul (120) und ein oder mehrere andere trennbare Aufbereitungsmodule (110, 130, 140, 150, 160) umfasst und wobei das Filtermodul (120) dazu ausgelegt ist, beim Betrieb einen vollen Strom von Systemwasser aufzunehmen und Partikel aus dem Systemwasser zu entfernen, und wobei die Vorrichtung (100) dazu ausgelegt ist, dass beim Betrieb das gesamte Systemwasser mindestens einmal in einem 24-Stunden-Zeitraum durch einen Filter (F1, F2) fließt, und wobei das Filtermodul (120) zwei parallel geschaltete Filter (F1, F2) und ein oder mehrere Ventile (6, 6A, 10, 10A) umfasst, die so ausgelegt sind, dass sie es ermöglichen, Fluid selektiv so zu leiten, dass es durch einen oder beide Filter (F1, F2) fließt.

2. Aufbereitungsvorrichtung (100) gemäß Anspruch 1, wobei die Vorrichtung (100) dazu ausgelegt ist, ein geschlossenes Heiz- und/oder Kühlsystem (200), gegebenenfalls ein HLK-System, aufzubereiten.

3. Aufbereitungsvorrichtung (100) gemäß Anspruch 1 oder 2, wobei die Vorrichtung (100) ferner **dadurch gekennzeichnet ist, dass** die Vorrichtung umfasst:
(i) das Filtermodul (120); und
ein oder mehrere Module, ausgewählt aus:
(ii) einem Probenahmemodul;
(iii) einem Druckspülmodul;
(iv) einem kombinierten Probenahme- und Druckspülmodul (110);
(v) einem UV-Modul (140); und
(vi) einem Dosiermodul (130); und
wobei die Module gegebenenfalls so ausgelegt sind, dass sie miteinander verbunden und voneinander getrennt werden können.

4. Aufbereitungsvorrichtung (100) gemäß einem der vorhergehenden Ansprüche, wobei das Filtermodul (120) einen 20-Mikrometer-Filter umfasst.

5. Aufbereitungsvorrichtung (100) gemäß einem der vorhergehenden Ansprüche, wobei die Aufbereitungsvorrichtung (100) eine oder mehrere Probenahmestellen umfasst, die so ausgelegt sind, dass beim Betrieb eine Probe des Systemwassers entnommen werden kann, und/oder wobei die Aufbereitungsvorrichtung (100) Druckspülstellen umfasst, die so ausgelegt sind, dass beim Betrieb ein Heiz- und/oder Kühlsystem mit Druck gespült werden kann und/oder wobei die Aufbereitungsvorrichtung (100) einen UV(Ultraviolett)-Strahler umfasst, der dazu ausgelegt ist, beim Betrieb das Systemwasser zu bestrahlen, und/oder wobei die Aufbereitungsvorrichtung (100) einen oder mehrere Dosierstellen umfasst, die so ausgelegt sind, dass beim Betrieb dem Systemwasser ein Aufbereitungsmittel zugesetzt werden kann.

6. Vorrichtung (100) gemäß einem der vorhergehenden Ansprüche, wobei die Vorrichtung (100) ein UV-Modul (140) mit einem UV-Strahler und einem oder mehreren Filtern umfasst.

7. Vorrichtung (100) gemäß einem der vorhergehenden Ansprüche, wobei die Vorrichtung (100) umfasst:
ein Filtermodul (120); und
ein kombiniertes Probenahme- und Druckspülmodul (110) und/oder ein UV-Modul (140); und
ein oder mehrere Module, ausgewählt aus:
einem Probenahmemodul;
einem Druckspülmodul; und
einem kombinierten Probenahme- und Druckspülmodul; und
einem Dosiermodul (130) .

8. Vorrichtung (100) gemäß einem der vorhergehenden Ansprüche, wobei die Vorrichtung (100) Aufbereitungsmodule aufweist, die in der folgenden Konfiguration angeordnet sind, beginnend mit dem stromaufwärtigsten Modul in Bezug auf die Strömungsrichtung des Systemwassers:
(I) ein kombiniertes Probenahme- und Druckspülmodul (110);
(II) ein temporäres Dosier- und/oder Pumpmodul (160), das dazu ausgelegt ist, vor dem normalen Betrieb eines Heiz- und/oder Kühlsystems getrennt zu werden;
(III) ein Filtermodul (120);
(IV) ein Dosiermodul (130);
(V) ein UV-Modul (140); und
(VI) ein kombiniertes Probenahme- und Druckspülmodul (110).

9. Vorrichtung (100) gemäß einem der vorhergehenden Ansprüche, wobei die Vorrichtung einen 1-Mikrometer-Filter und einen 0,25-Mikrometer-Filter umfasst.

10. Vorrichtung (100) gemäß einem der vorhergehenden Ansprüche, wobei die Vorrichtung (100) ein UV-Modul (140) umfasst, das einen UV-Strahler und einen oder mehrere Filter umfasst, und wobei das UV-Modul (140) einen 1-Mikrometer-Filter und einen 0,25-Mikrometer-Filter umfasst.

11. Verfahren zum Aufbereiten eines Heiz- und/oder Kühlsystems (200), **dadurch gekennzeichnet, dass** das Verfahren eine Vollstromfilterung des Systemwassers umfasst, um Partikel aus dem Systemwasser zu entfernen, sodass beim Betrieb das gesamte Systemwasser mindestens einmal in einem Zeitraum von 24 Stunden durch einen Filter fließt, wobei das Verfahren eine Aufbereitungsvorrichtung (100) gemäß einem der Ansprüche 1 bis 8 verwendet.

12. Verfahren gemäß Anspruch 11, wobei das Verfahren das Filtern des Systemwassers unter Verwendung eines 20-Mikrometer-Filters umfasst und/oder wobei, das Verfahren das Entfernen von Partikeln aus dem Systemwasser umfasst, ohne eine dynamische Spülung des Heiz- und/oder Kühlsystems (200) durchzuführen, und/oder wobei das Verfahren das Durchführen einer Druckspülung des Systems (200) ohne Filtern umfasst, um Verunreinigungen aus dem System (200) vor dem Durchführen der Filterung zu entfernen, und wobei das Verfahren gegebenenfalls das Filtern des Systemwassers umfasst, um Partikel zu entfernen, die aufgrund der Ausdehnung und Kontraktion von Komponenten des Heiz- und/oder Kühlsystems (200) freigesetzt werden, und wobei das Verfahren gegebenenfalls das Filtern des Systemwassers umfasst, um Partikel zu entfernen, die aufgrund der Ausdehnung und Kontraktion von Komponenten des Heiz- und/oder Kühlsystems (200) im Anschluss an einen Reinigungs- und/oder Spülprozess freigesetzt werden.

13. Verfahren gemäß einem der Ansprüche 11 bis 12, wobei das Verfahren umfasst, dass ein Heizsystem (200) Wärme und/oder Kühlung ausgesetzt wird, um eine Ausdehnung und Kontraktion der Systemrohrleitungen zu bewirken, wodurch Partikel freigesetzt und/oder mobilisiert werden, während sich kritische Anlagen und Regelventile im Bypass befinden, und dass das Systemwasser gefiltert wird, um freigesetzte Partikel zu entfernen, bevor die kritischen Anlagen und Steuerventile aus dem Bypass entfernt werden.

14. Verfahren gemäß einem der Ansprüche 11 bis 13, wobei das Verfahren ein kontinuierliches Filtern des Systemwassers umfasst, während es beim Betrieb durch das Heiz- und/oder Kühlsystem (200) fließt, und/oder wobei das Verfahren das Installieren einer Aufbereitungsvorrichtung (100) gemäß einem der Ansprüche 1 bis 8 als dauerhaften Teil des Heiz- und/oder Kühlsystems (200) umfasst und/oder wobei das System ein geschlossenes Heiz- und/oder Kühlsystem (200), gegebenenfalls ein HLK-System, umfasst.

15. Heiz- und/oder Kühlsystem (200) mit einer daran angeschlossenen Vorrichtung (100) gemäß einem der Ansprüche 1 bis 10, wobei das System gegebenenfalls ein geschlossenes Heiz- und/oder Kühlsystem (200), gegebenenfalls ein HLK-System, umfasst.

## Revendications

1. Appareil de traitement (100) configuré pour traiter un système de chauffage et/ou de refroidissement (200) **caractérisé en ce que** ledit appareil de traitement (100) comprend un module de filtre (120) et un ou plusieurs autres modules de traitement séparables (110, 130, 140, 150, 160) et le module de filtre (120) étant configuré, lors de l'utilisation, pour recevoir un flux complet d'eau de système et pour éliminer des particules de ladite eau de système, et l'appareil (100) étant configuré de telle sorte que, lors de l'utilisation, toute l'eau de système traverse un filtre (F1, F2) au moins une fois par période de 24 heures, et le module de filtre (120) comprenant deux filtres (F1, F2) reliés en parallèle et une ou plusieurs vannes (6, 6A, 10, 10A) configurées pour permettre au fluide d'être dirigé sélectivement pour s'écouler à travers un ou les deux filtres (F1, F2).

2. Appareil de traitement (100) selon la revendication 1, l'appareil (100) étant configuré pour traiter un système de chauffage et/ou de refroidissement fermé (200), éventuellement un système CVCA.

3. Appareil de traitement (100) selon la revendication 1 ou 2, l'appareil (100) étant en outre **caractérisé en ce que** ledit appareil comprend :
(i) ledit module de filtre (120) ; et un ou plusieurs modules choisis parmi :
(ii) un module d'échantillonnage ;
(iii) un module de chasse de puissance ;
(iv) un module combiné d'échantillonnage et de chasse de puissance (110) ;
(v) un module UV (140) ; et
(vi) un module de dosage (130) ; et
les modules étant éventuellement configurés de manière à pouvoir être reliés et séparés les uns des autres.

4. Appareil de traitement (100) selon l'une quelconque des revendications précédentes, le module de filtre (120) comprenant un filtre de 20 microns.

5. Appareil de traitement (100) selon l'une quelconque des revendications précédentes, l'appareil de traitement (100) comprenant un ou plusieurs points d'échantillonnage configurés, lors de l'utilisation, pour permettre le prélèvement d'un échantillon de l'eau du système, et/ou l'appareil de traitement (100) comprenant des points de chasse de puissance configurés, lors de l'utilisation, pour permettre la chasse de puissance d'un système de chauffage et/ou de refroidissement, et/ou l'appareil de traitement (100) comprenant un émetteur UV (ultra violet) configuré pour irradier l'eau du système et/ou l'appareil de traitement (100) comprenant un ou plusieurs points de dosage configurés, lors de l'utilisation, pour permettre l'ajout d'un traitement à l'eau du système.

6. Appareil (100) selon l'une quelconque des revendications précédentes, l'appareil (100) comprenant un module UV (140) comprenant un émetteur UV et un ou plusieurs filtres.

7. Appareil (100) selon l'une quelconque des revendications précédentes, ledit appareil (100) comprenant :
un module de filtre (120) ; et
un module combiné d'échantillonnage et de chasse de puissance (110) et/ou un module UV (140) ; et un ou plusieurs modules choisis parmi :
un module d'échantillonnage ;
un module de chasse de puissance ; et
un module combiné d'échantillonnage et de chasse de puissance; et
un module de dosage (130).

8. Appareil (100) selon l'une quelconque des revendications précédentes, ledit appareil (100) ayant des modules de traitement agencés selon la configuration suivante, en commençant par le module le plus en amont par rapport à la direction d'écoulement d'eau de système :
(I) un module combiné d'échantillonnage et de chasse de puissance (110) ;
(II) un module temporaire de dosage et/ou de pompage (160) configuré pour être séparé avant le fonctionnement normal d'un système de chauffage et/ou de refroidissement ;
(III) un module de filtre (120) ;
(IV) un module de dosage (130) ;
(V) un module UV (140) ; et
(VI) un module combiné d'échantillonnage et de chasse de puissance (110).

9. Appareil (100) selon l'une quelconque des revendications précédentes, l'appareil comprenant un filtre de 1 micron et un filtre de 0,25 micron.

10. Appareil (100) selon l'une quelconque des revendications précédentes, l'appareil (100) comprenant un module UV (140) comprenant un émetteur UV et un ou plusieurs filtres, et le module UV (140) comprenant un filtre de 1 micron et un filtre de 0,25 micron.

11. Procédé de traitement d'un système de chauffage et/ou de refroidissement (200) **caractérisée en ce que** le procédé comprend un filtrage complet de l'eau de système pour éliminer des particules de ladite eau de système de telle sorte que, lors de l'utilisation, toute l'eau de système passe par un filtre au moins une fois par période de 24 heures, le procédé utilisant un appareil de traitement (100) selon l'une quelconque des revendications 1 à 8.

12. Procédé selon la revendication 11, le procédé comprenant le filtrage de l'eau de système à l'aide d'un filtre de 20 microns et/ou, le procédé comprenant l'élimination des particules de l'eau de système sans réaliser un rinçage dynamique de système de chauffage et/ou de refroidissement (200), et/ou le procédé comprenant la réalisation d'une chasse de puissance du système (200) sans filtrage pour éliminer des contaminants du système (200) avant de réaliser ledit filtrage, et le procédé comprenant éventuellement un filtrage de ladite eau de système pour éliminer des particules libérées en raison de l'expansion et de la contraction des composants dudit système de chauffage et/ou de refroidissement (200) et le procédé comprenant éventuellement le filtrage de ladite eau de système pour éliminer des particules libérées en raison de l'expansion et de la contraction des composants dudit système de chauffage et/ou de refroidissement (200) à la suite d'un processus de nettoyage et/ou de rinçage.

13. Procédé selon l'une des revendications 11 à 12, le procédé consistant à soumettre un système de chauffage (200) à la chaleur et/ou au refroidissement pour provoquer l'expansion et la contraction de la tuyauterie de système amenant des particules à être libérées et/ou mobilisée tandis que des vannes de commande et un équipement critique sont en dérivation, et le filtrage de l'eau de système pour éliminer des particules libérées avant de retirer ledit équipement critique et lesdites vannes de commande de la dérivation.

14. Procédé selon l'une des revendications 11 à 13, le procédé comprenant le filtrage en continu de l'eau de système lorsqu'elle circule dans le système de chauffage et/ou de refroidissement (200) lors de l'utilisation et/ou le procédé comprenant l'installation d'un appareil de traitement (100) selon l'une des revendications 1 à 8 en tant que partie permanente du système de chauffage et/ou de refroidissement (200), et/ou le système comprenant un système de chauffage et/ou de refroidissement fermé (200), éventuellement un système CVCA.

15. Système de chauffage et/ou de refroidissement (200) auquel étant relié un appareil (100) selon l'une des revendications 1 à 10 et le système comprenant éventuellement un système de chauffage et/ou de refroidissement fermé (200), éventuellement un système CVCA.
